# EUROPÄISCHE PATENTANMELDUNG

(11) **EP 3 489 826 A1**
(43) Veröffentlichungstag der Anmeldung: **29.05.2019**
(21) Anmeldenummer: 17204121.2
(22) Anmeldetag: 28.11.2017
(51) Int. Cl.: G06F 9/50

(54) **FAHRZEUG MIT RECHENEINHEIT**

(71) Anmelder: MAGNA STEYR Fahrzeugtechnik AG & Co KG, 8041 Graz (AT)
(72) Erfinder: ERLACHER, Manuel, 9545 Radenthein (AT)
(74) Vertreter: Zangger, Bernd

(57) **Zusammenfassung**

Ein Fahrzeug, umfassend eine im Fahrzeug verbaute Recheneinheit (1), wobei durch die Recheneinheit (1) Operationen durchführbar sind, so dass die Recheneinheit (1) eine vorbestimmte Rechenleistung erbringen kann, wobei das Fahrzeug eine Übertragungseinheit (2) umfasst zum Senden und Empfangen von Daten, wobei die Recheneinheit (1) und die Übertragungseinheit (2) dazu eingerichtet sind, dass die Recheneinheit (1) Rechenleistung über die Übertragungseinheit (2) für ein Fremdsystem zur Verfügung stellt und ein Fahrzeugverbund, umfassend zumindest ein solches Fahrzeug und ein weiteres Fahrzeug, sowie ein Fahrzeugnetzwerk, umfassend zumindest ein solches Fahrzeug und eine stationäre Rechnerzentrale.

## Beschreibung

### Gebiet der Erfindung

Die vorliegende Erfindung betrifft ein Fahrzeug, umfassend eine im Fahrzeug verbaute Recheneinheit. Die Erfindung betrifft überdies einen Fahrzeugverbund, umfassend zumindest ein solches Fahrzeug und ein weiteres Fahrzeug. Die Erfindung betrifft schließlich auch ein Fahrzeugnetzwerk, umfassend zumindest ein solches Fahrzeug und eine stationäre Rechnerzentrale.

### Stand der Technik

In jüngerer Zeit werden Fahrzeuge zunehmend mit Recheneinheiten, also Systemen mit Mikroprozessoren ausgestattet, beispielsweise in Navigationssystemen bzw. Multimediageräten, sowie auch in Steuerungssystemen zur Motorsteuerung, für Fahrassistenzsysteme, etc. Besonders hohe Voraussetzungen werden an Recheneinheiten in sogenannten "autonomen Fahrzeugen" gestellt, die ein autonomes, also computergesteuertes Fahren ohne menschlichen Fahrer ermöglichen sollen. Gerade derartige Fahrzeuge können daher über Recheneinheiten mit hoher Rechenleistung verfügen.

Die hohe Rechenleistung derartiger moderner Fahrzeuge wird jedoch von den Fahrzeugen nicht ständig voll ausgelastet. Insbesondere bei Stillstand des Fahrzeuges, zum Beispiel beim Laden einer elektrischen Antriebsbatterie, wird die Rechenleistung fast gar nicht benötigt. In anderen Situationen wiederum, beispielsweise bei Kollisionsgefahr, benötigen die Fahrzeuge eine sehr hohe Rechenleistung, wodurch die Recheneinheiten in Bezug auf einen Normalbetrieb überdimensioniert werden müssten. Derartig hochleistungsfähige Recheneinheiten benötigen auch viel Strom, der durch einen im Fahrzeug beweglichen Energiespeicher schwierig bereit zu stellen ist und bei Nutzung einer Antriebsbatterie auf Kosten der Reichweite oder Fahrleistung des Fahrzeuges erkauft wird.

### Zusammenfassung der Erfindung

Es ist eine Aufgabe der Erfindung, ein Fahrzeug der genannten Art anzugeben, das die Rechenleistung einer verbauten Recheneinheit ökonomischer einsetzt und nutzt und somit auch die von der Recheneinheit benötigte elektrische Energie besser nutzt.

Die Lösung der Aufgabe erfolgt durch ein Fahrzeug, umfassend eine im Fahrzeug verbaute Recheneinheit, wobei durch die Recheneinheit Operationen durchführbar sind, so dass die Recheneinheit eine vorbestimmte Rechenleistung erbringen kann, wobei das Fahrzeug eine Übertragungseinheit umfasst zum Senden und Empfangen von Daten, wobei die Recheneinheit und die Übertragungseinheit dazu eingerichtet sind, dass die Recheneinheit Rechenleistung über die Übertragungseinheit für ein Fremdsystem zur Verfügung stellt.

Erfindungsgemäß kann die in einem Fahrzeug vorhandene Rechenleistung, die gerade nicht vom Fahrzeug selbst genutzt wird, nach außen übertragen werden und somit einem Fremdsystem zur Verfügung gestellt werden. Die ohnehin im Fahrzeug vorhandene Recheneinheit wird dadurch besser ausgenutzt, da diese zumindest von einem anderen Rechensystem genutzt werden kann. Aus der Übertragung der Rechenleistung kann der Betreiber des Fahrzeuges beispielsweise einen finanziellen Nutzen ziehen, aber auch, je nach Ausbildung der Erfindung, das Fahrzeug selbst letztlich Energie und Rechenleistung einsparen, insbesondere wenn das Fahrzeug selbst auch als Fremdsystem wirken kann und somit auch fremde Rechenleistung empfangen kann.

Die Übertragungseinheit ist bevorzugt dazu eingerichtet, Aufträge zur Durchführung von Operationen durch die Recheneinheit zu empfangen und Ergebnisse der durch die Recheneinheit durchgeführten Operationen zu senden.

Besonders bevorzugt ist die Übertragungseinheit umgekehrt auch dazu eingerichtet, Aufträge zur Durchführung von Operationen an ein Fremdsystem zu senden und Ergebnisse des Fremdsystems zu empfangen.

Vorzugsweise dienen die von der Recheneinheit zur Verfügung gestellte Rechenleistung bzw. die von der Recheneinheit für das Fremdsystem durchgeführten Operationen, einer Navigation oder autonomen Fahrzeugführung. Es kann sich dabei insbesondere um die Navigation oder autonomen Fahrzeugführung des Fremdsystems handeln.

Das Fahrzeug umfasst bevorzugt einen im Fahrzeug verbauten elektrischen Energiespeicher, insbesondere eine Hochvoltbatterie, und die im Fahrzeug verbaute Recheneinheit wird durch diesen Energiespeicher, insbesondere die Hochvoltbatterie, versorgt. Insbesondere kann der Energiespeicher eine Antriebsbatterie des Fahrzeuges sein. Das Fahrzeug weist daher bevorzugt einen vom Energiespeicher versorgten elektrischen Antriebsmotor auf.

Besonders bevorzugt ist das Fahrzeug autonom gesteuert, kann also fahrerlos betrieben werden.

Die Übertragungseinheit umfasst bevorzugt ein kabelloses Sende- und Empfangssystem. Die Rechenleistung kann dann kabellos an das Fremdsystem übertragen werden. Ein kabelloses Sende- und Empfangssystem kann beispielsweise in der Nähe einer elektrischen Ladestation für einen Energiespeicher des Fahrzeuges eine Sende- und Empfangsvorrichtung der Ladestation nutzen, beispielsweise ein von der Ladestation zur Verfügung gestelltes WLAN Netzwerk.

Die Übertragungseinheit kann ein kabelgebundenes Sende- und Empfangssystem umfassen, wodurch im Allgemeinen höhere Übertragungsraten erzielt werden können. Ein kabelgebundenes Sende- und Empfangssystem ist bevorzugt mit einer Ladevorrichtung des Energiespeichers gekoppelt. Insbesondere kann eine Schnittstelle zur elektrischen Ladung des Fahrzeuges und eine Schnittstelle zur Übertragungseinheit durch eine gemeinsame Klappe zugänglich sein und/ oder kann ein Ladekabel mit einem Übertragungskabel der Übertragungseinheit zu einem Kabelstrang verbunden sein.

Ein erfindungsgemäßer Fahrzeugverbund kann zumindest ein Fahrzeug wie oben beschrieben umfassen und ein weiteres Fahrzeug als Fremdsystem, so dass die Recheneinheit und die Übertragungseinheit des Fahrzeuges dazu eingerichtet sind, dass die Recheneinheit Rechenleistung über die Übertragungseinheit für das weitere Fahrzeug zur Verfügung stellt.

Das weitere Fahrzeug ist vorzugsweise ebenfalls, wie das Fahrzeug, wie oben beschrieben ausgebildet. Somit umfasst der Fahrzeugverbund bevorzugt zumindest zwei, vorzugsweise viele Fahrzeuge, die erfindungsgemäß ausgestattet sind und ihre Rechenleistung zu jeweils anderen Fahrzeugen des Fahrzeugverbunds übertragen, nämlich senden und empfangen, können.

Ein Fahrzeugnetzwerk kann zumindest ein Fahrzeug wie oben beschrieben umfassen und eine stationäre Rechnerzentrale als Fremdsystem, so dass die Recheneinheit und die Übertragungseinheit des Fahrzeuges dazu eingerichtet sind, dass die Recheneinheit Rechenleistung über die Übertragungseinheit für die stationäre Rechnerzentrale zur Verfügung stellt.

Die Übertragung der Rechenleistung kann somit auch an eine stationäre Zentrale erfolgen. Die Rechenleistung kann von der Zentrale beispielsweise an andere Fahrzeuge zur Verfügung gestellt werden, also Rechenergebnisse von der Rechnerzentrale an diese anderen Fahrzeuge übertragen werden. Die Rechenleistung kann von der Rechnerzentrale auch für andere Aufgaben genutzt werden, beispielsweise zum sogenannten "minen" von Kryptowährung.

Eine "stationäre Zentrale" kann durch einen oder mehrere stationäre Rechner gebildet sein. Eine stationäre Zentrale muss die übertragene Rechenleistung nicht an andere Fahrzeuge oder an andere stationäre Zentralen bzw. stationäre Rechner weiterleiten. Optional können dies stationäre Zentralen aber.

Die übertragene Rechenleistung kann sowohl von stationären als auch von mobilen Fremdsystemen nicht nur für Funktionen im Zusammenhang mit Fahrzeugen genutzt werden, wie Navigation oder Fahrzeugsteuerung, sondern auch zur Lösung anderer Aufgaben, wie beispielsweise dem erwähnten "minen" von Kryptowährung.

### Kurzbeschreibung der Zeichnungen

Die Erfindung wird im Folgenden beispielhaft unter Bezugnahme auf die Zeichnungen beschrieben.
- Fig. 1: ist eine schematische Schnittansicht eines erfindungsgemäßen Fahrzeuges.
- Fig. 2: ist eine schematische Schnittansicht erfindungsgemäßer Fahrzeuge in einem Fahrzeugverbund und einem Fahrzeugnetzwerk.

### Detaillierte Beschreibung der Erfindung

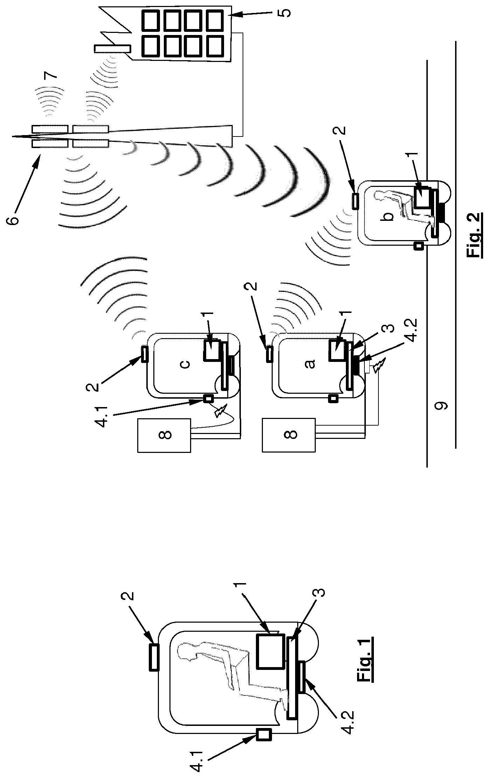

In Fig. 1 ist ein erfindungsgemäßes Fahrzeug dargestellt, insbesondere ein autonomes, elektrisch angetriebenes, Fahrzeug, welches eine im Fahrzeug verbaute Recheneinheit 1 umfasst. Die Recheneinheit 1 ist in diesem Beispiel unter einem Sitz des Fahrzeuges angeordnet. Durch die Recheneinheit 1 sind Operationen durchführbar, so dass die Recheneinheit 1 eine vorbestimmte Rechenleistung erbringen kann, beispielsweise zur Navigation des Fahrzeuges und/oder zur autonomen Steuerung des Fahrzeuges.

Das Fahrzeug umfasst eine Übertragungseinheit 2 zum Senden und Empfangen von Daten, wobei die Recheneinheit 1 und die Übertragungseinheit 2 dazu eingerichtet sind, dass die Recheneinheit 1 Rechenleistung über die Übertragungseinheit 2 für ein Fremdsystem zur Verfügung stellt, insbesondere direkt, oder indirekt über eine zentrale Rechnerstation 5, für andere Fahrzeuge.

Die Übertragungseinheit 2 ist zur drahtlosen Datenübertragung ausgebildet, sie kann aber auch für ein kabelgebundenes Übertragen der Daten ausgebildet sein. Insbesondere während des elektrischen Ladens des Fahrzeuges kann die Datenübertragung auch über ein Kabel erfolgen.

Das Fahrzeug weist einen Energiespeicher 3, nämlich eine Hochvoltbatterie, als Antriebsbatterie auf, die auch die Recheneinheit 1 mit Strom versorgt. Unterhalb des Energiespeichers 3 ist eine Ladevorrichtung 4.2 für kabelloses, insbesondere induktives elektrisches Laden angeordnet.

Ferner weist das Fahrzeug eine Ladevorrichtung 4.1 für kabelgebundenes elektrisches Laden des Energiespeichers 3 auf.

In Fig. 2 sind verschiedene Szenarien dargestellt, wie ein erfindungsgemäßes Fahrzeug seine ungenützte Rechenleistung anderen Systemen als Dienstleistung zur Verfügung stellen kann, insbesondere anderen Fahrzeugen und/oder einer zentralen Rechnerstation 5.

Das Fahrzeug a parkt an einem Stehplatz einer Ladestation 8 und wird mittels "Wireless Charging", also kabellos über die Ladevorrichtung 4.2 des Fahrzeuges geladen. Während des Ladevorganges unterstützt Fahrzeug a ein autonomes Fahrzeug b, welches auf einer Straße 9 fährt und dabei Rechenleistung benötigt, zum Beispiel zur Unterstützung der in Fahrzeug b verbauten autonomen Systeme oder beim Kartographieren bzw. Navigieren des Fahrzeuges b, mit ungenützter Rechenleistung des Fahrzeuges a.

Hierdurch wird weniger Rechenleistung bei Fahrzeug b benötigt und dadurch Energie eingespart. Dies wiederum erhöht die Reichweite von Fahrzeug b. Die Datenübertragung muss nicht direkt an das Fahrzeug b erfolgen ("Car to Car"), sondern kann auch über eine stationäre Rechnerzentrale 5 bzw. deren Sende/Empfangseinheit 6 oder ähnliche Zwischenstationen und/oder Vermittlungsstationen erfolgen.

Fahrzeug c, welches an einem Stehplatz einer Ladestation 8 mit einem Ladekabel über die kabelgebundene Ladevorrichtung 4.1 geladen wird, unterstützt ein Rechenzentrum bzw. eine Rechnerzentrale 5, welche Rechenleistung benötigt, mit ungenützter Rechenleistung. Die Datenübermittlung muss auch an die Rechnerzentrale 5 nicht direkt erfolgen.

Die Rechnerzentrale 5 kann auch einen Zugangspunkt zum Internet 7 oder einem anderen öffentlichen oder privaten Netzwerk darstellen.

Fahrzeug c kann auch mit ungenützter Rechenleistung eigenständige Aufgaben für seinen Besitzer bzw. Betreiber übernehmen, zum Beispiel im Netzwerk 7 nach Kryptowährung "schürfen" bzw. "minen".

Somit kann ein erfindungsgemäßes Fahrzeug ungenützte Rechenleistung des Fahrzeuges zur Verfügung stellen. In einem Fahrzeugverbund oder Fahrzeugnetzwerk können Fahrzeuge direkt oder indirekt Aufgaben für andere, insbesondere fahrende Fahrzeuge übernehmen, beispielsweise zum Kartographieren, Navigieren oder Steuern der anderen Fahrzeuge und/oder auch ungenützte Rechenleistung an eine zentrale Rechnerstation und/oder über ein Netzwerk, wie das Internet, bereitstellen.

Auch beliebige Kombinationen der zuvor genannten Anwendungsbeispiele sind von der Erfindung erfasst. So kann beispielsweis auch ein an einer Ladevorrichtung 4.2 kabellos elektrisch ladendes Fahrzeug Rechenleistung an ein Rechenzentrum bzw. eine Rechnerzentrale zur Verfügung stellen. Ebenso kann die Rechnerleistung für andere Aufgaben und/oder Fremdsysteme bzw. Empfänger zur Verfügung gestellt werden. Ferner kann beispielsweise ein an einer Ladestation 4.1 kabelgebundenes elektrisch ladendes Fahrzeug Rechenleistung für ein anderes Fahrzeug b, welches auf einer Straße fährt und dabei Rechenleistung benötigt, zur Verfügung stellen. Hierbei ist die zur Verfügung gestellte Rechenleistung nicht auf die Bewältigung des Fahrbetriebes beschränkt, sondern kann vom Empfänger, beispielsweise Fahrzeug b, für vielfältige Aufgaben genutzt werden. Der Empfänger der Rechenleistung, also das Fremdsystem, muss kein Fahrzeug sein.

### Bezugszeichenliste

- 1: Recheneinheit
- 2: Übertragungseinheit
- 3: Energiespeicher
- 4.1: Ladevorrichtung kabelgebunden
- 4.2: Ladevorrichtung kabellos
- 5: Rechnerzentrale
- 6: Sende-/Empfangsstation der Rechnerzentrale
- 7: Internet
- 8: Ladestation
- 9: Straße

## Patentansprüche

1. Fahrzeug, umfassend eine im Fahrzeug verbaute Recheneinheit (1), wobei durch die Recheneinheit (1) Operationen durchführbar sind, so dass die Recheneinheit (1) eine vorbestimmte Rechenleistung erbringen kann, wobei das Fahrzeug eine Übertragungseinheit (2) umfasst zum Senden und Empfangen von Daten,
**dadurch gekennzeichnet, dass** die Recheneinheit (1) und die Übertragungseinheit (2) dazu eingerichtet sind, dass die Recheneinheit (1) Rechenleistung über die Übertragungseinheit (2) für ein Fremdsystem zur Verfügung stellt.

2. Fahrzeug nach Anspruch 1,
**dadurch gekennzeichnet, dass** die Übertragungseinheit (2) dazu eingerichtet ist, Aufträge zur Durchführung von Operationen durch die Recheneinheit (1) zu empfangen und Ergebnisse der durch die Recheneinheit (1) durchgeführten Operationen zu senden.

3. Fahrzeug nach zumindest einem der vorhergehenden Ansprüche,
**dadurch gekennzeichnet, dass** die von der Recheneinheit (1) zur Verfügung gestellte Rechenleistung bzw. die von der Recheneinheit (1) für das Fremdsystem durchgeführten Operationen, einer Navigation oder autonomen Fahrzeugführung dienen.

4. Fahrzeug nach zumindest einem der vorhergehenden Ansprüche,
**dadurch gekennzeichnet, dass** das Fahrzeug einen im Fahrzeug verbauten elektrischen Energiespeicher (3) umfasst, insbesondere eine Hochvoltbatterie, und die im Fahrzeug verbaute Recheneinheit (1) durch den Energiespeicher (3) versorgt wird.

5. Fahrzeug nach Anspruch 4,
**dadurch gekennzeichnet, dass** das Fahrzeug einen vom Energiespeicher (3) versorgten elektrischen Antriebsmotor aufweist und/oder autonom gesteuert ist.

6. Fahrzeug nach zumindest einem der vorhergehenden Ansprüche,
**dadurch gekennzeichnet, dass** die Übertragungseinheit (2) ein kabelloses Sende- und Empfangssystem umfasst.

7. Fahrzeug nach zumindest einem der vorhergehenden Ansprüche,
**dadurch gekennzeichnet, dass** die Übertragungseinheit (2) ein kabelgebundenes Sende- und Empfangssystem umfasst, wobei das kabelgebundene Sende- und Empfangssystem bevorzugt mit einer Ladevorrichtung (4.1, 4.2) des Energiespeichers (3) gekoppelt ist.

8. Fahrzeugverbund, umfassend zumindest ein Fahrzeug nach zumindest einem der vorhergehenden Ansprüche und ein weiteres Fahrzeug das als Fremdsystem wirkt, so dass die Recheneinheit (1) und die Übertragungseinheit (2) des Fahrzeuges dazu eingerichtet sind, dass die Recheneinheit (1) Rechenleistung über die Übertragungseinheit (2) für das weitere Fahrzeug zur Verfügung stellt.

9. Fahrzeugverbund nach Anspruch 8,
**dadurch gekennzeichnet, dass** auch das weitere Fahrzeug nach zumindest einem der Ansprüche 1 bis 7 ausgebildet ist.

10. Fahrzeugnetzwerk, umfassend zumindest ein Fahrzeug nach zumindest einem der Ansprüche 1 bis 7 und eine stationäre Rechnerzentrale (5) die als Fremdsystem wirkt, so dass die Recheneinheit (1) und die Übertragungseinheit (2) des Fahrzeuges dazu eingerichtet sind, dass die Recheneinheit (1) Rechenleistung über die Übertragungseinheit (2) für die stationäre Rechnerzentrale (5) zur Verfügung stellt.

11. Fahrzeugnetzwerk nach Anspruch 10,
**dadurch gekennzeichnet, dass** das Fahrzeugnetzwerk weitere Fahrzeuge nach zumindest einem der Ansprüche 1 bis 7 umfasst und die stationäre Rechnerzentrale (5) dazu eingerichtet ist, die von Recheneinheiten (1) von Fahrzeugen übertragene Rechenleistung an Recheneinheiten (1) anderer Fahrzeuge zu übertragen.
